# EUROPÄISCHE PATENTSCHRIFT

(11) **EP 2 863 836 B1**
(45) Veröffentlichungstag und Bekanntmachung des Hinweises auf die Patenterteilung: **06.10.2021**
(21) Anmeldenummer: 13750622.6
(22) Anmeldetag: 21.06.2013
(51) Int. Cl.: A61D 1/02, A61D 7/00, G06F 17/00, G06Q 50/22

(54) **VERFAHREN ZUR AUFZEICHNUNG VON DATEN**
METHOD FOR RECORDING DATA
PROCÉDÉ D'ENREGISTREMENT DE DONNÉES

(30) Priorität: 22.06.2012 AT 7052012
(43) Veröffentlichungstag der Anmeldung: 29.04.2015
(73) Patentinhaber: Smartbow GmbH, 4675 Weibern (AT)
(72) Erfinder: AUER, Wolfgang, A-4675 Weibern (AT)
(74) Vertreter: Mannion, Sally Kim
(86) Internationale Anmeldenummer: PCT/AT2013/000103
(87) Internationale Veröffentlichungsnummer: WO 2013/188895

(56) Entgegenhaltungen:
- WO-A2-01/49343
- US-A1- 2001 044 731
- US-A1- 2002 038 392
- US-A1- 2003 164 401

## Beschreibung

Die Erfindung betrifft ein Verfahren zur Aufzeichnung von Daten, die durch die Manipulation eines Tieres generiert werden, wobei die Daten von einem Sender an einen Empfänger übertragen werden, wobei für die Übertragung der ein Netzwerk umfassend den Sender, den Empfänger und das Tier aufgebaut wird, und wobei das Tier anhand eines Identifikationscodes erkannt und die Daten dem Tier zugeordnet werden, sowie ein System zur Aufzeichnung von Daten, die durch die Manipulation eines Tieres generiert werden, wobei das System ein Netzwerk für die Übertragung der Daten umfasst, wobei das Netzwerk zumindest einen Sender und zumindest einen Empfänger umfasst, die zur Kommunikation über die Haut des Tieres ausgebildet sind, und wobei der Sender und/oder der Empfänger einen Datenspeicher umfasst, in dem ein Software-Programm hinterlegt ist.

Zur Erhaltung der Gesundheit von Tieren ist es mitunter erforderlich, diesen Tieren (vorsorglich) Medikamente zu verabreichen. In der Herdenhaltung stellt dies aber mitunter ein Problem dar, beispielsweise wenn sämtliche Tiere geimpft werden sollen. Oft erfolgt die Aufzeichnung der durch die Medikation generierten Daten manuell, wobei die Daten vorerst handschriftlich festgehalten und erst später in ein EDV-System übertragen werden. Es gibt allerdings auch mobile Geräte, die den Dateneintrag durch den Arzt an Ort und Stelle ermöglichen. Dateneingaben während der Verabreichung von Medikamenten beim Tier sind jedoch schwierig, da Tiere bedingt durch den durch die Impfung ausgelösten Stress nicht still stehen. Es kann damit auch nicht garantiert werden, dass die verabreichte Medikation auch tatsächlich dem Tier verabreicht wurde. Beispielsweise kann es vorkommen, dass bei einer plötzlichen Bewegung des Tieres die Kanüle einer Impfpistole herausgezogen wird und der Impfstoff "ins Leere" abgegeben wird. Gerade bei sehr großen Tierherden kann es in der Folge vorkommen, dass diese Fehlmedikation nicht erkannt wird und in der Folge Tiere ohne entsprechenden Impfschutz vorhanden sind.

Netzwerke zur Überwachung von Körperfunktionen eines Tiers sind im Stand der Technik bereits vielfach beschrieben worden. Beispielsweise beschreibt die EP 2 208 458 A1 ein derartiges Netzwerk umfassend mindestens zwei verschiedene, mit dem Körper des Tieres verbindbare Netzwerkknoten, wobei mindestens zwei der Netzwerkknoten jeweils mindestens eine medizinische Funktion aufweisen, insbesondere eine diagnostische Funktion und/oder eine Medikationsfunktion, wobei die Netzwerkknoten eingerichtet sind, um über den Körper des Tieres unmittelbar miteinander zu kommunizieren und Daten und/oder Befehle auszutauschen. Dieses Netzwerk kann auch Aktoren in "Drug Delivery"-Systemen aufweisen, sodass also die automatische Verabreichung von Medikamenten möglich ist. Das System zielt also darauf ab, dass aufgrund der Messung eines Parameters ein Medikament verabreicht wird, wenn der Parameter außerhalb des Normbereiches liegt. Ob das Medikament tatsächlich verabreicht worden ist, kann direkt nicht festgestellt werden, sondern nur über die Verfolgung der Veränderung des Parameters.

Die EP 0109184 A2 (veröffentlicht 1984), die DE 195 47 560 A1 (veröffentlicht 1997) und zeigen ein Identifizierungssystem für Personen, wobei ein Gerät, welches beispielsweise die Form einer Armbanduhr haben kann durch eine Person zu tragen ist, wobei in dem Gerät eine Identifizierungscode gespeichert ist, wobei der Identifizierungscode über die Haut der Person von dem Gerät an ein anderes Gerät übertragen wird und wobei das andere Gerät den Code prüft und bei positivem Prüfungsergebnis zu Bedienbarkeit freischaltet. Das Gerät dient also als eine Art Ausweis für eine Person durch welche diese dazu bemächtigt wird, allein durch Berührung mit den Fingern etwas schalten zu können. Eine Anwendung ist beispielsweise eine Türschließanlage für ein Kraftfahrzeug. Anwendbarkeit für medizinische Zwecke ist nicht erwähnt.

Die die EP 0 824 799 B1 (veröffentlicht 1998) zeigt 1997 drahtloses Kommunikationssystem, wobei ein Gerät am Körper eines Menschen angebracht ist und Signale in diesen einkoppelt. Vom Körper werden sie drahtlos weitergesendet. Mögliche Anwendungen sind Näherungsdetektion und Gestensteuerung. Medizinische Anwendung wird nicht erwähnt.

Die US 2003125017 A1 beschreibt ein Netzwerk welches im Gesundheitsbereich für Menschen anzuwenden ist. Ein Patient trägt am Körper ein Gerät, in welchem zumindest ein Identifizierungscode für den Patienten gegenüber einer Datenverarbeitungsanlage gespeichert ist. Behandlungsgeräte weisen auch einen Identifizierungscode auf. Im Fall von Behandlung eines Patienten mit Hilfe eines Behandlungsgerätes wird automatisch das Zusammenpassen von Patient und vorgesehener Behandlung überprüft und es wird die Behandlung dokumentiert. Eine Identifizierung des Personals, welches eine Behandlung durchführt ist nicht vorgesehen.

Die WO 200149343 A2 beschreibt ein System für das Impfen von Tieren und für Datenaufzeichnung in diesem Zusammenhang. Die mit einer Identitätsnummer versehene Impfpistole ist mit einer Sende- und Empfangseinrichtung ausgestattet, durch welche sie in der Lage ist, mit einer am Tier angebrachten elektronischen Tiermarke zu kommunizieren und so die Identität eines Tieres, welches geimpft wird festzustellen und zu speichern. Von der Impfpistole aus werden die Daten gleich oder später an eine zentrale Datenverarbeitungsanlage eingelesen wobei verschiedene Wege der Datenübertragungen genannt sind. Identifizierung der die Impfung durchführenden Person ist nicht vorgesehen. Es ist lediglich vorgesehen, dass in der zentralen Datenverarbeitungsanlage eingegeben werden muss, wer die Impfpistole entnimmt und was damit verabreicht wird.

Die Aufgabe vorliegender Erfindung besteht darin, medizinische Manipulationen an Tieren besser zu dokumentieren, besser überprüfbar zu machen besser verlässlich zu machen und dabei dennoch den Arbeitsaufwand der damit befassten Personen nicht zu erhöhen sondern zu verringern.

Diese Aufgabe wird einerseits mit dem eingangs genannten Verfahren und andererseits mit dem eingangs genannten System gelöst, wobei bei dem Verfahren vorgesehen ist, dass bei einer Manipulation die Identität des Manipulators, welcher ein Mensch ist, automatisch mit erfasst wird, indem der Manipulator ein Sendegerät mitführt, in welchem eine Identifikationssignatur des Manipulators gespeichert ist und welches im Fall einer Manipulation Teil des Netzwerkes wird indem es auf elektronischem Weg mit weiteren Netzwerkknoten Daten austauscht, wobei als Übertragungsweg der Körper des Manipulators verwendet wird und dazu Signale kapazitiv in den Körper des Manipulators eingekoppelt werden.

Indem beim Erfassen einer Manipulation - wie beispielsweise einer Impfung - automatisch mit erfasst wird, wer der Manipulator - beispielsweise ein bestimmter Tierarzt - ist wird gegenüber Systemen bei denen dies nicht geschieht Arbeitsaufwand für die Protokollerstellung vermieden. Weiters wird die Überprüfbarkeit verbessert und es wird höhere Sicherheit erreicht, dass die Dokumentationen der Manipulationen vollständig und fehlerfrei sind.

In einer vorteilhaften Weiterentwicklung werden die die Daten der Manipulation erst nach Abschluss der Manipulation und bei positiver Erledigung der Manipulation übersandt und das Software-Programm verhindert eine Speicherung der Daten so lange, bis vom Sender der positive Abschluss der Manipulation übermittelt wird.

Ein Vorteil ist dabei, dass nicht nur die Daten aus der Manipulation am Tier automatisch aufgezeichnet werden können, also die manuelle Datenerfassung vermieden wird, wodurch die Datensicherheit und auch die Vollständigkeit des Datensatzes verbessert werden, sondern dass die Datenerfassung nicht automatisch mit der Auslösung einer Aktion generiert wird, sondern erst, wenn diese Aktion auch tatsächlich positiv abgeschlossen ist. Es können also in der Folge Datensätze zu Tieren selektiert werden, die die Entsprechende Eintragung der Aktion, beispielsweise der Impfung, der Besamung, der Temperaturmessung, etc., nicht aufweisen, sodass erkannt wird, bei welchen Tieren die Aktion wiederholt werden muss. Aufgrund der automatischen Datenübertragung während der Aktion, kann beispielsweise die fehlerhafte Aktion bei einer Massenimpfung sofort wiederholt werden, sodass also der Tierarzt nicht ein zweites Mal bestellt werden muss. Durch die Einbindung des Tieres selbst in das Netzwerk, also insbesondere die Datenübertragung über die Haut des Tieres, kann vermieden werden, dass bei großen Herden Fehlerdaten verwendet werden, die beispielsweise generiert werden können, wenn die Daten über Funk ausgetauscht werden, da aufgrund des geringen Platzes, beispielsweise während einer Impfung, Netzwerkknoten nicht nur die Daten des richtigen Tieres sondern auch die Daten unmittelbar benachbarter Tiere auslesen können.

Nach einer Ausführungsvariante ist vorgesehen, dass die Daten nur unter der Voraussetzung, dass das Netzwerk während der Manipulation nicht unterbrochen wurde, übersandt werden. Damit ist eine weitere Erhöhung der Datensicherheit bzw. Vermeidung von fehlerhaften Daten einfach realisierbar. Am Beispiel einer Impfpistole wird dann, wenn bei einer Impfung die Impfpistole, die im Netzwerk einen Sender bildet, unbeabsichtigt aus dem Tier herausgezogen wird bevor die Impfung abgeschlossen ist, die Datenleitung über den Körper, insbesondere die Haut, des Tieres unterbrochen. Damit sind das zu frühe Herausziehen und damit das nicht vollständige Verabreichen von impfstoff einfach erkennbar.

Es ist aber auch möglich, dass bei einer negativen Erledigung der Manipulation (also bei einer fehlerhaften oder unvollständigen Durchführung der Manipulation) ein Fehlercode übersandt wird, wodurch die Auswertung für die Nachmedikation oder wiederholende Manipulation am Tier durch Selektion der Datensätze mit Fehlercode vereinfacht werden kann.

Entsprechend der Erfindung wird die Manipulation von einem Manipulator durchgeführt, wobei der Manipulator eine Identifikationssignatur aufweist, die vor, zu Beginn oder während der Manipulation an den Empfänger übertragen wird. In bevorzugten Vorgangsweisen weist auch der Sender eine Identifikationssignatur auf, die vor, zu Beginn oder wahrend der Manipulation an den Empfänger übertragen wird und/oder wird als Manipulation dem Tier ein Substanz verabreicht welcher eine identifikationssignatur zugeordnet ist, die vor, zu Beginn oder während der Manipulation an den Empfänger übertragen wird und/oder wird die Manipulation mit einer Manipulationsvorrichtung durchgeführt, wobei die Manipulationsvorrichtung eine identifikationssignatur aufweist, die vor, zu Beginn oder während der Manipulation an den Empfänger übertragen wird.

Mit zumindest einer dieser Ausführungsvarianten, wobei in der bevorzugten Ausführungsform der Erfindung sämtliche dieser Ausführungsvarianten verwirklicht sind, wird die Automatik der Datenzuordnung weiter erhöht, wodurch die Sicherheit der Richtigkeit der zugeordneten Daten weiter verbessert werden kann. Damit kann eine zumindest Großteils lückenlose Erfassung der an der Manipulation beteiligten Elemente bzw. Aktoren erreicht werden. Zudem kann mit der Datenerfassung zu der Substanz auch eine automatische Lagerhaltung für diese Substanz erreicht werden. Es kann der Aufzeichnungspflicht bei aufzeichnungspflichtigen Medikamenten, beispielsweise Antibiotika einfacher nachgekommen werden, d.h. es kann der Nachweis der Übereinstimmung der eingekauften Menge zur verabreichten Menge, rascher realisiert werden, wobei die Daten gegebenenfalls direkt an die entsprechende Behörde weitergeleitet werden können, sodass auch nachträgliche Verfälschungen der Daten ausgeschlossen werden können.

Die Daten werden vorzugsweise drahtlos an einen Datenverarbeitungsanlage übertragen, wodurch das nachträgliche Einlesen der Daten in die Datenverarbeitungsanlage entfällt, insbesondere auch nicht vergessen werden kann. Es ist damit eine entsprechende Entlastung des Tierhalters bzw. des Manipulators erreichbar.

Vorzugsweise wird in das Netzwerk eine am Tier angebrachte elektronische Tiermarke eingebunden, um damit die Zuordnung der Daten zu dem betreffenden Tier zu vereinfachen. Es können damit die Daten auch in dieser Tiermarke hinterlegt werden, sodass sie beispielsweise durch Auslesen der Daten mit einem mobilen Lesegerät auch unmittelbar vor Ort zur Verfügung stehen.

Es kann auch vorgesehen werden, dass durch die Berührung des Tieres mit der Manipulationsvorrichtung dem Tier zugehörige Daten an die Manipulationsvorrichtung übertragen und vorzugsweise auf dieser angezeigt werden. Es kann damit erreicht werden, dass in der Manipulationsvorrichtung die Daten des Tieres, insbesondere dessen Identifikationscode hinterlegt werden kann, sodass die Manipulationsvorrichtung zu einem späteren Zeitpunkt erkennen kann, ob ein bestimmtes Tier bereits behandelt worden ist oder nicht. Bei bereits erfolgter Behandlung kann damit eine Sperre in der Manipulationsvorrichtung ausgelöst werden, die eine neuerliche Behandlung verhindert. Andererseits ist damit auch eine visuelle Kontrolle durch den Manipulator, also beispielsweis den Arzt möglich, ob er das richtige Tier vor sich hat.

In einer bevorzugten Ausführungsform des Systems ist die Manipulationsvorrichtung durch eine Impfpistole oder ein Fieberthermometer oder eine Besamungseinrichtung gebildet.

Das Netzwerk des Systems kann weiter eine elektronische Tiermarke umfassen. Dabei kann der Empfänger durch die Tiermarke gebildet sein. Damit werden Daten betreffend Manipulationen (z.B. Impfungen) an dem Tier direkt auf der am Tier befindlichen Tiermarke gespeichert und sind somit im Bedarfsfall auch ganz ohne Netzwerk einfach bei Vorhandensein des Tieres abrufbar.

Nach einer Ausführungsvariante dazu kann die Tiermarke einen Netzwerkknoten in einem Ortungssystem bilden. Es ist damit möglich, ein bestimmtes Tier in einer größeren Herde zu orten, sodass eine (Nach)Behandlung eines bestimmten Tieres rascher durchgeführt werden kann, indem das Tier rascher aufgefunden werden kann. Dies ist insbesondere von Vorteil, wenn bei einigen wenigen Tieren eine Fehlbehandlung durch Nichtverabreichung einer Substanz erfolgt ist.

Zum besseren Verständnis der Erfindung wird diese anhand der nachfolgenden Figuren näher erläutert.

Es zeigen jeweils in schematisch vereinfachter Darstellung:
- Fig. 1:: eine schematische Darstellung der Impfung eines Tieres;
- Fig. 2:: eine erste Ausführungsvariante einer Empfängerschaltung;
- Fig. 3:: eine zweite Ausführungsvariante einer Empfängerschaltung;
- Fig. 4:: eine Ausführungsvariante einer Senderschaltung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

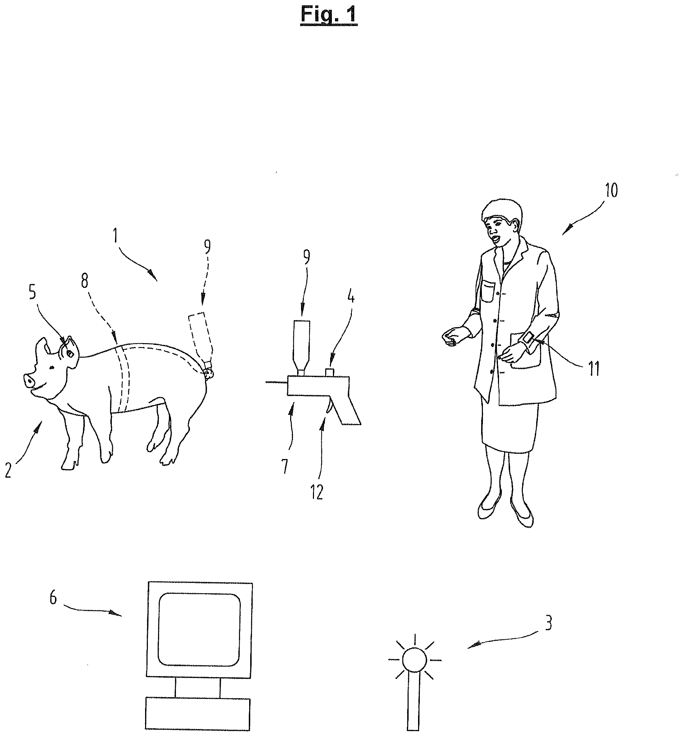

Fig. 1 veranschaulicht ein System 1 zur Aufzeichnung bzw. Erfassung von Daten, die durch die Manipulation eines Tieres 2 bzw. an einem Tier 2 generiert werden.

Die Manipulation an dem Tier 2 ist bevorzugt die Verabreichung einer Substanz, insbesondere eines Medikaments oder eines Impfstoffes, vorzugsweise in flüssiger Form, die Besamung des Tieres 2 oder die Messung der Körpertemperatur des Tieres 2. Prinzipiell sind aber auch andere Manipulationen am Tier 2 vorstellbar, insbesondere Manipulationen, bei denen dem Tier 2 etwas verabreicht wird.

Das System 1 umfasst in der einfachsten Ausführungsvariante zumindest eine Empfangsvorrichtung 3 für Daten, zumindest eine Sendeeinrichtung 4 für Daten, wobei die zumindest eine Empfangsvorrichtung 3 und die zumindest eine Sendevorrichtung 4 während der Durchführung des Verfahrens nach der Erfindung zu einem Netzwerk für die Datenübertragung zusammengefasst sind.

In dieses Netzwerk zur Datenübertragung wird vorzugsweise das Tier 2 selbst, insbesondere die Haut des Tieres 2, eingebunden, zumindest während der Übertragung der Daten, die durch die Manipulanten des Tieres 2 bzw. am Tier 2 generiert werden, also beispielsweise während der Verabreichung der Substanz oder während der Messung der Körpertemperatur oder während der Besamung. Das Tier 2 wird dabei zur Leitung von tierspezifischen Daten verwendet.

Tierspezifische Daten können beispielsweise der Name des Tieres 2, eine Identifikationscode des Tieres 2, das Gewicht des Tieres 2, das Alter des Tieres 2, etc. sein. Diese Daten können in einer elektronischen Tiermarke 5, insbesondere einer elektronischen Ohrmarke, oder einem, insbesondere implantierten, Mikrochip enthalten sein, d.h. einer entsprechenden Speichereinrichtung für diese Daten, die die Tiermarke 5 umfasst. Ebenso ist es möglich, dass diese Daten zentral gespeichert werden, beispielsweise in einer elektronischen Datenverarbeitungsanlage 6, z.B. einem PC, aus dem sie über die Tiermarke ausgelesen werden. Es sind aber auch Mischvarianten möglich, beispielsweise dass die Tiermarke 5 lediglich die Kennung des Tieres 2 enthält und dieser Kennung in der Folge aus der Datenverarbeitungsanlage 6 die weiteren tierspezifischen Daten zugeordnet werden. Im einfachsten Fall genügt jedoch die Kennung des Tieres 2, d.h. der dem Tier zugeordnete identifikationscode, um die während der Manipulation generierten Daten eindeutig dem Tier zuordnen zu können.

Vorzugsweise wird eine elektronische Ohrmarke verwendet. Derartige Ohrmarken sind bereits aus dem Stand der Technik bekannt, beispielsweise aus der von der Anmelderin stammenden AT 509 892 A, die in diesem Umfang der Ausführungen zu der Tiermarke zum Inhalt gegenständlicher Anmeldung gehört. Demzufolge kann die Tiermarke 6 eine elektronische Schaltung aufweisen, die eine oder mehrere der folgenden Baugruppen umfasst: einen Reed-Kontakt, mit welchem der Tiermarke ein- und/oder ausgeschalten werden kann, eine Funkschnittstelle, einen Transponder, eine Antenne der Funkschnittstelle, zumindest einen Infrarot-Sensor, einen Vibrations-Motor, zumindest eine Lichtquelle, insbesondere zumindest eine Leuchtdiode, einen Kompass, einen Lagesensor, einen Bewegungssensor, einen Beschleunigungssensor, Mittel zur Ortung, insbesondere einen GPS-Empfänger, einen Mikrocontroller, zumindest einen Lichtsensor, zumindest einen Receiver, zumindest einen Gassensor, einen Akkumulator bzw. eine Batterie und/oder einen Stromgenerator. Bezüglich der Funktionen der einzelnen Bestandteile der elektronischen Schaltung wird auf die AT 509 892 A verwiesen.

Die Empfangsvorrichtung 3 ist zumindest während der Manipulation am Tier 2 zum Datenaustausch bzw. zur Datenübermittlung mit der Datenverarbeitungsanlage 6 verbunden. Sie kann aber auch laufend bzw. ständig mit der Datenverarbeitungsanlage in Kontakt stehen. In der bevorzugten Ausführungsvariante ist die Empfangsvorrichtung 3 allerdings In die Datenverarbeitungsanlage 6 integriert, d.h. sie bildet mit dieser eine Einheit.

Die zumindest eine Empfangsvorrichtung 3 und die zumindest eine Sendevorrichtung 4 können entsprechend dem Stand der Technik für derartige Vorrichtungen ausgebildet bzw. aufgebaut sein.

Die Sendevorrichtung 4 ist bei dieser Ausführungsvariante an einer Manipulationsvorrichtung 7 angeordnet bzw. bildet mit dieser einen integralen Bestandteil. Vorzugsweise ist die Sendevorrichtung 4 mit der Manipulationsvorrichtung 7 so verbunden, dass eine Trennung von dieser nur unter Zuhilfenahme von Werkzeug möglich ist.

Die Manipulationsvorrichtung 7 ist in der in vollen Linien in Fig. 1 dargestellten Ausführungsvariante eine Impfpistole. Sie kann aber beispielsweise auch durch einen im Grundaufbau aus dem Stand der Technik bekannten Besamungsgürtel 8 (in Fig. 1 strichliert dargestellt) oder eine Temperaturmessvorrichtung, insbesondere ein Thermometer, gebildet sein.

Für den Fall, dass mit der Manipulationsvorrichtung 7 dem Tier 2 eine Substanz, insbesondere ein Medikament oder ein Impfstoff oder eine Besamungsflüssigkeit, verabreicht werden soll, kann diese einen Behälter 9 aufweisen, in dem die Substanz enthalten ist.

Die Manipulationsvorrichtung 7 wird zumindest während der Manipulation vorzugsweise in das Netzwerk zum Datenaustausch eingebunden.

Die Tiermarke 5 bildet vorzugsweise einen Netzwerkknoten in einem Ortungssystem, mit dem das Tier 2 geortet werden kann. Derartige Ortungssysteme sind bereits aus dem Stand der Technik bekannt.

Die Ortung bzw. Lokalisierung kann in an sich bekannter Weise erfolgen, beispielsweise mittels der aus dem Stand der Technik bekannten "time difference of arrival" Methode. Da diese Methoden aus dem Stand der Technik bekannt sind, sei hierzu auf die einschlägige Literatur verwiesen.

Das Ortungssystem kann mehrere Sende- und Empfangsmodule (in Fig. 1 nicht dargestellt) aufweisen, wobei die Tiermarke 5 eines dieser Sende- und Empfangsmodule bildet. Auch die Empfangsvorrichtung 3 und/oder die Sendevorrichtung 4 können als derartige Sende-und Empfangsmodule ausgebildet sein. Zumindest eines dieser Sende-und Empfangsmodule, bevorzugt mehrere, sind als so genannte Ankerknoten mit fixer Position für die Lokalisierung und den bevorzugt kabellosen Datentransport ausgebildet. Die weiteren Sende- und Empfangs-module können hinsichtlich der Ortskoordinaten variable (Anker)knoten bilden, deren Ortskoordinaten über die fixen Ankerknoten beispielsweise mittels Triangulation bestimmt werden können.

Die Positionsbestimmung des oder der Sende- und Empfangsmodule kann in der Datenverarbeitungsanlage 6 erfolgen.

Das Ortungssystem kann folgendermaßen aufgebaut sein. Das aus den Ankerknoten gebildete Ankerknotennetzwerk kommuniziert untereinander mit dem 802.11s Standard (Draft, Mesh Netzwerk; http://de.wikipedia.org/wiki/IEEE_802.11s). Der Datenaustausch im Netzwerk mit Clients (13, 14, 15, 16) erfolgt über den 802.11.bgn Standard zu den Ankerknoten oder über ein drahtloses Netzwerk, insbesondere das Internet. (http://de.wikipedia.org/wiki/IEEE_802.11) Die Lokalisierung der Sende- und Empfangsmodule erfolgt über den 802.15.4a - Standard zu den Ankerknoten. (http://de.wikipedia.org/wiki/IEEE_802.15.4 oder http://de.wikipedia.org/wiki/Ultrabreitband)

Die Berechnung der Position der Tiermarke 5 kann auch in dem oder den Ankerknoten durchgeführt werden. Es ist dazu möglich, dass in jedem Sende- und Empfangsmodul einer Tiermarke 5 eine Liste verfügbarer Ankerknoten gespeichert ist und aus dieser Liste für die Bestimmung der Position der Tiermarke 5 für jede neue Positionsberechnung ein anderer Ankerknoten ausgewählt wird. Dazu kann jedes Sende- und Empfangsmodul ein Lokalisierungsprotokoll zu einer zentralen Recheneinheit senden, wobei im Lokalisierungsprotokoll die Kennung des zur Positionsberechnung zu verwendenden Ankerknotens mit gesendet wird, und dass, sobald das Lokalisierungsprotokoll und ein Lokalisierungssignal bei dem oder den (horchenden) Ankerknoten eintrifft/eintreffen von der zentralen Recheneinheit Protokollpakete an den entsprechenden Ankerknoten für die Positionsberechnung gesendet werden.

Es sind aber auch andere Realsierungen des Ortungssystems, wie sie im Stand der Technik beschrieben sind, möglich.

Erfindungsgemäß ist ein Manipulator 10, also beispielsweise ein Tierarzt, zumindest während der Manipulation am Tier 2 in das Netzwerk zum Datenaustausch eingebunden. Bevorzugt ist dazu der der Manipulator mit einer Sendevorrichtung 12, die gegebenenfalls zusätzlich als Empfangsvorrichtung ausgebildet sein kann, versehen, beispielsweise mit in Art einer Armbanduhr.

Die bevorzugte Verfahrensweise zur Aufzeichnung von Daten aus der Manipulation des Tieres 2 sieht - am Beispiel einer Impfung - folgenden Verfahrensablauf vor:
Für die Impfung des Tieres 2 durch den Manipulator 10, also den Tierarzt, wird dieser von dem System 1 personifiziert erkannt. Dazu ist in der Sendevorrichtung 11, die der Manipulator trägt, eine Identifikationssignatur gespeichert, die vor, zu Beginn oder während der Manipulation an die Empfangsvorrichtung 3, also insbesondere die Datenverarbeitungsanlage 6, übertragen wird. Diese Datenübertragung erzeugt über ein entsprechendes Software-Programm in der Datenverarbeitungsanlage 6 einen Eintrag in ein Impfprotokoll, beispielsweise des Namens des Manipulators 10 und der Uhrzeit und des Datums der Manipulation bzw. der Datenerfassung.

Die Übertragung der Daten des Manipulators 10 kann direkt an die Datenverarbeitungsanlage 6 drahtlos erfolgen, oder es werden entsprechende Ankerknoten bzw. mobile Sende- und Empfangsmodule als Zwischenstation zwischen dem Manipulator 10 und der Datenverarbeitungsanlage 6 verwendet. Es kann auch die Tiermarke 5 des zu impfenden Tieres 2 die Daten des Manipulators 10 empfangen und an die Datenverarbeitungsanlage 6 übertragen. Weiter ist in der Manipulationsvorrichtung 7, d.h. in der dieser zugeordneten Sendevorrichtung 4, eine entsprechende Identifikationssignatur bzw. -codierung (der Ausdruck Signatur wird in der Beschreibung mit dem Ausdruck Code synonym verwendet) hinterlegt, die ebenfalls an die Datenverarbeitungsanlage 6 übertragen wird, sofern es für die Nachvollziehung der Manipulation am Tier 2 von Bedeutung ist, mit welcher Manipulationsvorrichtung 7 die Manipulation durchgeführt wurde. Beispielsweise kann dies für die Fehlersuche von Vorteil sein, wenn während der Manipulation ein durch die Manipulationsvorrichtung hervorgerufener Fehler auftritt.

Die zu verabreichende Substanz, also in diesem Beispiel der impfstoff, ist bevorzugt ebenfalls mit einer Identifikationssignatur versehen, beispielsweise einem Barcode auf der Verpackung, die vor, zu Beginn oder während der Manipulation an den Empfänger übertragen werden kann. Die Identifikationssignatur kann beispielsweise über eine Lesevorrichtung der Manipulationsvorrichtung 7 ausgelesen und an die Datenverarbeitungsanlage in der beschriebenen Weise vorzugsweise drahtlos übermittelt werden. Andererseits besteht auch die Möglichkeit, dass die Substanz selbst, insbesondere deren Verpackung, eine Sendeeinrichtung aufweist, die die identifikationssignatur an die Datenverarbeitungsanlage 7 überträgt. Dies kann beispielsweise erfolgen, wenn die Substanz in die Manipulationsvorrichtung 7 eingesetzt bzw. eingefüllt wird, wozu die Sendevorrichtung der Substanz einen entsprechenden Sensor aufweisen kann. Andererseits kann die Übertragung auch dadurch ausgelöst werden, dass die Sendevorrichtung der Substanz Daten des Tieres 2 aus der Tiermarke 5 erhält sobald die Manipulationsvorrichtung 7 das Tier 2 berührt und damit über das Tier 2 Daten dessen Daten an die Sendevorrichtung der Substanz übertragen werden, die das Senden der Substanzdaten auslösen.

In der Tiermarke 5 ist ebenfalls eine Identifikationssignatur für das Tier 2 hinterlegt, die die eindeutige Zuordnung der während der Manipulation generierten Daten zu diesem Tier 2 ermöglicht. Zur Übertragung der Daten kann die Tiermarke 5 eine entsprechende Sendevorrichtung aufweisen. Ebenso können diese Daten bei Kontakt der Manipulationsvorrichtung 7 mit dem Tier 2 durch die Manipulationsvorrichtung 7 und die dadurch erzeugte "Datenleitung" ausgelesen und von deren Sendevorrichtung 4 an die Datenverarbeitungsanlage 6 übertragen werden. Alternativ dazu kann dies auch über die fakultativ vorhandene Sendevorrichtung der Substanz erfolgen.

Die eigentliche Manipulation des Tieres 2 besteht in der Verabreichung des Impfstoffes. Die dabei generierten Daten, d.h. die positive Bestätigung, dass der Impfstoff auch tatsächlich verabreicht wurde werden zwingend an die Datenverarbeitungsanlage 6 übertragen, nachdem der Impfstoff verabreicht wurde. Dies kann beispielsweise erkannt werden, indem die Impfpistole einen Sensor aufweist, der erkennt, dass ein Abzug 12 der Impfpistole tatsächlich betätigt wurde. Nachdem die Injektion des Impfstoffes danach Im Bruchteil einer Sekunde erfolgt, ist die Wahrscheinlichkeit, dass die Impfpistole während dieses kurzen Zeitintervalls aus dem Tier 2 herausgezogen und damit der Impfstoff ins Leere abgegeben wurde, relativ gering. Es wird also mit dem erfindungsgemäßen Verfahren eine hohe Sicherheit erreicht, dass der Dateneintrag in einem Impfprotokoll, dass der Impfstoff tatsächlich verabreicht wurde, richtig ist.

Um jedoch auch diese kurze Zeitspanne der Fehlermöglichkeit zu vermeiden, kann vorgesehen sein, dass die Daten der Verabreichung der Substanz nur übermittelt werden, wenn während der Verabreichung die Datenleitung über das Tier 2 zur Tiermarke 5 nicht unterbrochen wurde, also das Netzwerk zwischen Manipulationsvorrichtung 7 und Tiermarke 5 während der gesamten Zeitdauer der Verabreichung der Substanz bestanden hat.

Die Detektion, dass die Substanz die Manipulationsvorrichtung 7 verlassen hat, kann auch auf andere Weise erfolgen, beispielsweise über eine Strömungssensor, etc..

Im der einfachsten Ausführungsvariante werden jene Daten die mit der Manipulation unmittelbar zusammenhängen erst nach der erfolgten Manipulation übertragen. Am Beispiel der Impfung also erst nach der Verabreichung der vollständigen vorgesehenen Menge Substanz.

Prinzipiell ist es aber auch möglich, dass die Daten zwar übertragen werden, aber aufgrund der fehlenden Bestätigung des positiven Abschlusses, beispielsweise der Betätigung des Abzuges 12 der Impfpistole, von der Datenverarbeitungsanlage 6 aber nicht in das entsprechende Protokoll eingetragen werden. Stattdessen können die Daten in einem separaten Protokoll (für fehlerhafte oder unvollständige Manipulationen) oder gespeichert werden.

Vorzugsweise werden noch weitere mit der Manipulation im Zusammenhang stehende Daten übermittelt, insbesondere Daten zur Identifikation der verabreichten Substanz, zur Menge der verabreichten Substanz, zur Identifikation der Manipulationsvorrichtung 7, sowie zum Ort und zum Zeitpunkt (Uhrzeit und Datum) der Verabreichung, sodass aus dem in der Datenverarbeitungsanlage 6 erzeugten Protokoll eine lückenlose Dokumentation der Manipulation (wer, was, wie viel, wann, wo) möglich ist.

In der Ausführungsvariante der Erfindung als Besamung des Tieres 2 kann der positive Abschluss der Manipulation anhand des leeren Behälters 9 detektiert werden, wozu dieser Behälter 9 einen entsprechenden Sensor und gegebenenfalls eine entsprechende Sendevorrichtung aufweisen kann sofern die Daten nicht über die Tiermarke 5 selbst übertragen werden. Nachdem die Schlauchleitung des Besamungsgürtels 8 relativ weit in das Tier 2 eingeführt wird, ist die Wahrscheinlichkeit, dass diese Schlauchleitung unbeabsichtigt herausgezogen wird, vernachlässigbar klein. Es sei in diesem Zusammenhang darauf hingewiesen, dass die Besamung ein Vorgang ist, der sich über einen relativ langen Zeitraum erstreckt, währenddessen sich die Tiere 2 üblicherweise frei bewegen können. Es ist daher von Vorteil, wenn, wie voranstehend ausgeführt, das System 1 in ein Ortungssystem eingebettet ist bzw. dieses umfasst.

Im Falle der Temperaturmessung des Tieres 2 kann der Endpunkt der Temperaturmessung bei sich nicht weiter erhöhender Temperatur im Thermometer detektiert werden, wie dies bei elektronischen Thermometern bekannt ist, bei denen beispielsweise der Endpunkt der Temperaturmessung über ein akustisches Signal angezeigt wird. In der Anwendung bei Tieren 2 wird bevorzugt ein elektrisches Signal erzeugt, das die Datenübertragung auslöst bzw. den positiven Abschluss der Temperaturmessung bestätigt. Dass dabei das Thermometer während der Messung tatsächlich im Tier 2 steckt kann durch den Datenaustausch aufgrund der Datenleitung über den Körper des Tieres 2 bestimmt werden (üblicherweise wird die Temperatur im After des Tieres 2 gemessen).

Generell kann bei einem nicht positiven Abschluss der Manipulation ein Fehlercode erzeugt werden, beispielsweise in der Tiermarke oder in der Sendevorrichtung 4 der Manipulationsvorrichtung 7, der an die Datenverarbeitungsanlage 6 übertragen wird und in das entsprechende Protokoll eingetragen werden kann.

Jedenfalls mit Ausnahme des Datenaustausches unmittelbar am Tier 2 über den Körper des Tieres 2, insbesondere die Haut des Tieres, werden die Daten im Netzwerk vorzugsweise drahtlos übertragen.

Eine weitere bevorzugte Ausnahme von der drahtlosen Datenübertragung betrifft die Datenübertragung von der Sendevorrichtung 11, welche den (dentifizierungscode des Manipulators für die Dokumentation einer Manipulation beisteuert. Indem die Sendevorrichtung, beispielsweise als Armband ausgebildet ist und in direktem Körperkontakt mit dem Manipulator getragen wird, bietet sich an, Daten von der Sendevorrichtung 11 an das Manipulationsgerät über den Körper, insbesondere die Haut des Manipulators zu übertragen. Gegenüber der Anwendung von drahtloser Datenübertragung wird damit die Gefahr verringert, dass es im System dann, wenn mehrerer Manipulatoren in räumlicher Nähe zueinander arbeiten zu Fehlzuordnungen von Identifizierungscode der Manipulatoren kommen kann.

In Hinblick auf die Datenübertragung über die Haut sei an die einschlägige Literatur verwiesen. Es sei dazu nur so viel angemerkt, dass durch kapazitive Kopplung über den Körper eines Tieres 2 bzw. des Manipulators 10, die diesen berührende Manipulationsvorrichtung 6 mit der Sendevorrichtung 11 und die Tiermarke 5 miteinander zu einem Netzwerk verbunden werden.

Nach einer Ausführungsvariante kann vorgesehen werden, dass durch die Berührung des Tieres 2 mit der Manipulationsvorrichtung 6 dem Tier 2 zugehörige Daten an die Manipulationsvorrichtung 6 übertragen und auf dieser angezeigt werden können. Sollte die Anzeigefunktion störend sein, beispielsweise weil bei jeder unbeabsichtigten Berührung eines Tieres 2 diese Daten angezeigt werden, kann diese Funktion bei Bedarf an der Manipulationsvorrichtung auch ausgeschaltet bzw. deaktiviert werden.

Das Verfahren nach der Erfindung hat den Vorteil, dass automatisch zu jeder Manipulation, also insbesondere jeder Medikation, am Tier 2 Daten zum Durchführenden also zum Manipulator 10 gespeichert werden sowie bevorzugt auch Daten zum Ort der Manipulation und/oder zum Zeitpunkt der Manipulation. Bei einem positiven Abschluss der Manipulation, also insbesondere wenn die Substanz verabreicht wurde oder die Temperatur gemessen wurde, werden die Daten zumindest die unmittelbar mit dieser Manipulation zusammenhängenden Daten vorzugsweise über ein Funknetz von einem Netzwerkknoten (beispielsweise die Impfpistole, d.h. die Manipulationsvorrichtung 7 bzw. der dieser zugeordneten Sendevorrichtung 4, an das Netzwerk zur Datenübertragung und damit an eine zentrale Datenbank der Datenverarbeitungsanlage 6 gesendet. Es können damit auch die Wartezeiten für den Verkauf und den Verzehr der Substanz berechnet und dem Manipulator 10 angezeigt werden. Es ist damit auch möglich, dass die relevanten Daten automatisch oder halbautomatisch an eine zentrale Stelle (Bund/Land/Organisation) weitergeleitet werden. Vorzugsweise werden bei einer Berührung des Tieres 2 durch den Manipulator 10 aufgrund der induktiven Kopplung die Tierdaten dieses Tieres 2 aus einer Liste von Tieren auf einem mobilen Gerät, z.B. einem Tablett-PC oder einem Smart Phone, ausgewählt und angezeigt. Die Substanz kann über die Manipulationsvorrichtung 10, also das Verabreichungsgerät, dem Tier zugeordnet werden, beispielsweise über RFID, Barcodeerkennung, NFC.

Es können also Aufzeichnungen zu Medikamenten/Medikationen, Impfungen, Besamungen und Temperaturmessungen bei Tieren automatisiert werden. Der Manipulator 10, das Tier 2 und die Substanz und gegebenenfalls die Manipulationsvorrichtung haben vorzugsweise jeweils eine Sende und/oder Empfangseinheit für die induktive Kopplung mit dem Tier 2 und für die drahtlose Kommunikation mit dem Netzwerk.

Als Daten können gespeichert werden: persönliche Daten des Manipulators 10, Tier-ID, Medikamentenart, Medikamentenmenge, Verabreichungsart, Datum, Zeit, Ort/Position aufgrund der Positionserkennung (x,y,z Koordinaten). Weitere Daten können bei Bedarf ebenfalls übertragen werden.

Es kann mit dem System auch der Warenbestand (beispielsweise der Medikamente) automatisch über die Datenverarbeitungsanlage 6 abgeglichen werden.

Die Speicherung kann bis zum positiven Abschluss der Manipulation verhindert werden. Dazu kann ein entsprechendes Software-Programm in der Datenverarbeitungsanlage 6 hinterlegt sein. Es besteht aber auch die Möglichkeit, dass dieses Programm in einem Speicher der Sendevorrichtung 4 und/oder einem Speicher der Empfangsvorrichtung 3 hinterlegt ist, und die Übertragung der Daten bis zur Meldung des positiven Abschlusses verhindert.

Es ist weiter mit den tierspezifischen Daten des Tieres 2, die beispielsweise in der Datenverarbeitungsanlage 6 und/oder der elektronischen Tiermarke 5 hinterlegt sind, z.B. der Art des Tieres 2, das Alter des Tieres 2, das Gewicht des Tieres 2, etc., möglich, dass die Menge an zu verabreichender Substanz in der Datenverarbeitungsanlage 6 oder in der Manipulationsvorrichtung 7 berechnet wird, sodass die jeweils richtige Menge an Substanz automatisch von der Manipulationsvorrichtung 7 abgegeben wird.

Die Erfindung hat gerade bei großen Tierherden (z.B. Schweine, Schafe, Kühe, etc.) den Vorteil, beispielsweise bei einer Massenimpfung, die einzelnen Tiere 2 automatisch mit einer größeren Sicherheit als "erledigt" markiert werden können, wodurch Zeit eingespart und die Arbeit erleichtert werden kann. Durch die einfache Berührung des Tieres 2 kann ein Übertragungsweg bereitgestellt werden, über den sich eine eindeutige Identifikation des Tieres 2 realisieren lässt, insbesondere im Zusammenspiel mit der elektronischen Tiermarke 5. Es kann also eine kapazitive Kopplung eines Signals aus dem drahtlosen Netzwerk auf das Tier 2 erfolgen. Mit anderen Worten ausgedrückt, kann eine "Mensch-Tier-Kopplung" zum Datenaustausch realisiert werden.

Bezüglich der drahtlosen Datenübertragung sei auf den einschlägigen Stand der Technik dazu verwiesen, insbesondere die Modulation des Trägersignals zur Datenübertragung,

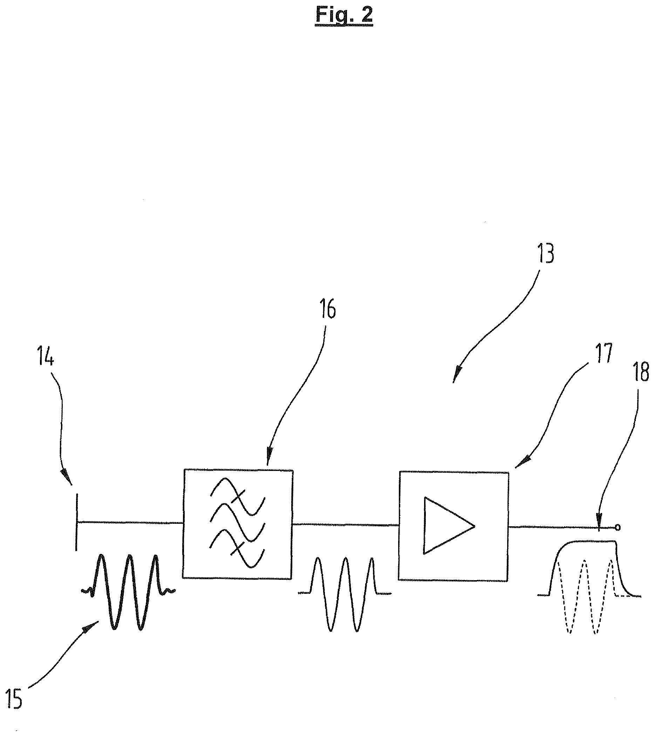

Fig. 2 zeigt eine erste Ausführungsvariante einer möglichen Schaltung 13 der Empfangsvorrichtung 3 (Fig. 1) in Form eines Blockschaltbildes.

Es sei an dieser Stelle erwähnt, dass es unterschiedlichste Möglichkeit zur Ausbildung der Schaltungen der Empfangsvorrichtung 3 bzw. der Sendevorrichtung 4 gibt und es nicht möglich ist, diese alle an dieser Stelle anzuführen. Die Darstellungen in den Fig. 2 bis 4 haben daher nur einen erläuternden und keinen einschränkenden Charakter.

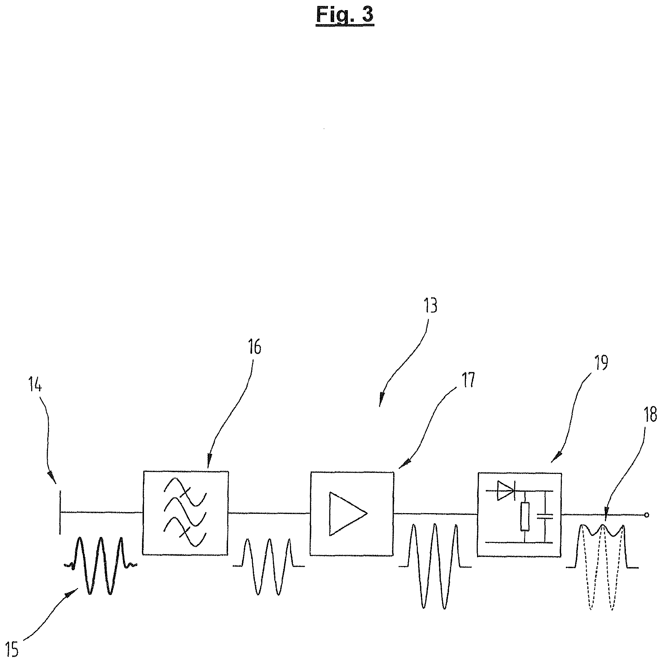

Die Schaltung 13 umfasst bzw. besteht aus einer Elektrode 14, die ein Signal 15 liefert und am Tier 2 (Fig. 1) angebracht wird. Dieses Signal 15 wird In einem aktiven Bandpass 16 (OPV-Schaltung mit hoher Eingangsimpedanz = passiver Hochpass) verarbeitet. Der aktive Bandpass 16 ist elektrisch leitend mit der Elektrode 14 verbunden. An den Bandpass 16 anschließend ist ein logarithmischer Verstärker 17 angeordnet, der schließlich ein Ausgangssignal 18 liefert, das, wie die Fig. 3 zeigt, deutlich unterschiedlich zum erfassten Signal 15 ist.

Sollte dabei der Grundpegel des Ausgangssignals 18 zu groß sein, besteht die Möglichkeit, ein schmalbandiges Filter mit einer Mittenfrequenz in Höhe der Trägerfrequenz vorzusehen. In Fig. 3 ist ein Blockschaltbild einer weiteren Ausführungsvariante der Empfangsvorrichtung 3 dargestellt. Diese umfasst wieder die Elektrode 14 und den damit in elektrischer Verbindung stehenden aktiven Bandpass 16. An den Bandpass 16 anschließend ist ein nicht logarithmischer Verstärker 17 angeordnet. Mit dem Verstärker 17 ist ein Hüllkurvendetektor 19 verbunden, der wiederum weiter zu verarbeitende Ausgangssignal 18 liefert.

Eingangsseitig kann in dieser Schaltung 13 ebenfalls ein Filter vorgesehen werden, mit dem Störungen oberhalb und unterhalb der Trägerfrequenz herausgefiltert werden können.

Der Verstärker 17 kann bei dieser Ausführungsvariante aus, insbesondere drei, Operationsverstärkern aufgebaut sein.

Mit dem Hüllkurvendetektor 19 ist es möglich einerseits die negative Halbwelle des verstärkten Wechselsignals weg zu schneiden und andererseits kann mit der positiven Halbwelle ein Kondensator aufgeladen werden. Damit kann am Kondensator die Einhüllende des Signals abgegriffen werden, deren Welligkeit umso geringer ist, je größer die Zeitkonstante □ der R-C-Kombination ist.

Zum Abschneiden der negativen Halbwelle kann eine Diode verwendet werden. Insbesondere wird eine Diode mit einer geringen Flussspannung verwendet, um einen möglichst hohen Anteil des Ausgangssignals zum Laden des Kondensators verwenden zu können.

Bei beiden Ausführungsvarianten der Schaltung 13 kann das Ausgangssignal 18 an einen Mikrokontroller abgegeben werden. Um bei der Ausführungsvariante der Schaltung 13 nach Fig. 3 ein besseres Rechtecksignal zu erhalten kann dem Hüllkurvendetektor 19 ein Komparator nachgeschaltet werden.

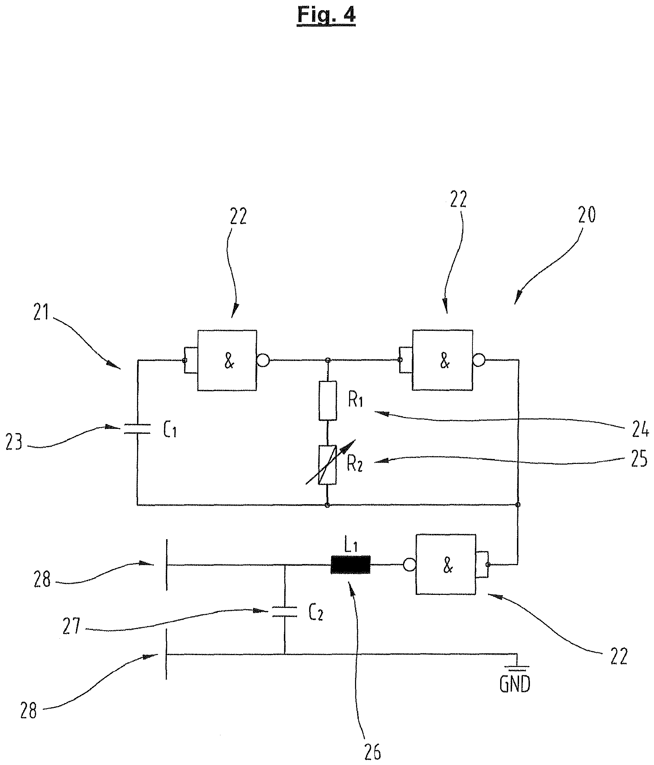

Fig. 4 zeigt eine Ausführungsvariante einer Schaltung 20 der Sendevorrichtung 4 (Fig. 1). Diese umfasst einen Taktgenerator 21. Der Taktgenerator 21 umfasst bzw. besteht aus zwei NAND-Gattern 22, vorzugsweise in CMOS Technologie. Die NAND-Gatte 22 bilden gemeinsam mit einem Kondensator 23, einem Widerstand 24 und einem Potentiometer 25 einen oszillierenden Schaltungsteil.

Bevorzugt ist ein drittes NAND-Gatter 22 mit der Ausgangsseite des Taktgenerators 21 verbunden. Mit diesem dritten NAND-Gatter 22 kann eine weitere Signalaufbereitung erfolgen, indem damit die dem Rechtecksignal überlagerte Lade- und Entladekurve des Kondensators entfernt wird.

Ausgangsseitig an das zweite oder das dritte NAND-Gatter 22 angeschlossen umfasst diese Schaltung 20 noch eine Spule 26 und mit dieser verbunden einen Kondensator 27. Zudem umfasst diese Schaltung noch Sendeelektroden 28.

Die Datenübertragung kann mit einem OOK Verfahren erfolgen, d.h. dass die Modulation bereits über das Ein-/Ausschalten einer Versorgungsspannung (beispielsweise von einer 5 V Gleichspannungsquelle) realisiert werden kann.

Wird das zu übertragende Signal von einem Mikrokontroller bereitgestellt, kann dieser direkt zur Versorgung der Schaltung verwendet werden, sofern dieser genügend Strom am Ausgang treiben kann. Es besteht aber auch die Möglichkeit die Schaltungsversorgung mit einem selbstsperrenden Feldeffekttransistor zu modulieren, der sich nahezu leistungslos von einem Mikrokontroller steuern lässt. Erfolgt die Versorgung direkt mit dem Mikrokontroller kann ein Entstörfilter vorgesehen werden, das beispielsweise aus einem Parallelfilter und einer Ferritspule in Serie besteht, wie dies in Fig. 4 dargestellt ist.

Die Ausführungsbeispiele zeigen mögliche Ausführungsvarianten des Systems 1, wobei an dieser Stelle bemerkt sei, dass auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt,

Der Ordnung halber sei abschließend darauf hingewiesen, dass zum besseren Verständnis des Aufbaus des Systems 1 dieses bzw. dessen Bestandteile teilweise unmaßstäblich und/oder vergrößert und/oder verkleinert dargestellt wurden.

Ergänzend sei bemerkt, dass der Manipulator 10 nicht wie bisher dargestellt und beschrieben unbedingt ein Mensch sein muss. Er kann auch eine Vorrichtung, typischerweise eine

Art Roboter sein, beispielsweise ein Melkroboter der mit einer Zusatzvorrichtung ausgestattet ist, mit Hilfe derer beispielsweise geimpft werden kann oder eine Temperaturmessung durchgeführt werden kann oder eine Creme etc. aufgetragen werden kann.

Weiters sei klargestellt, dass die Sendevorrichtung 11, in welcher eine Identifikationssignatur für den Manipulator gespeichert ist, weicher im Fall einer Manipulation ausgesendet wird, auch unmittelbar mit der Manipulationsvorrichtung 7 verbunden sein kann. Beispielsweise kann die Sendevorrichtung 11 ein elektronisches Speicherelement sein, welches an die Manipulationsvorrichtung 7 angekoppelt werden muss. Dem Vorteil, dass damit durch den Manipulator de facto nur ein Gerät mitgeführt werden muss anstatt zweien, steht der Nachteil gegenüber, dass damit die Gefahr erhöht wird, dass missverstanden wird, dass die Sendevorrichtung 11 genau einem Manipulator zuzuordnen ist und bestimmungsgemäß nicht mit der Manipulationsvorrichtung 7 von einem Manipulator zu einem anderen Manipulator weitergegeben werden darf.

## Patentansprüche

1. Verfahren zur Aufzeichnung von Daten, die durch die von einem Manipulator (10), welcher ein Mensch ist, durchgeführte Manipulation eines Tieres (2) generiert werden, wobei die Daten von einer Sendevorrichtung (4) an eine Empfangsvorrichtung (3) übertragen werden, wobei für die Übertragung der Daten ein Netzwerk umfassend die Sendevorrichtung (4), die Empfangsvorrichtung (3) und das Tier (2) aufgebaut wird, und wobei das Tier (2) anhand eines Identifikationscodes erkannt und die Daten dem Tier (2) zugeordnet werden, wobei als Teil der Daten der Manipulation die Identität des Manipulators (10) erfasst wird,
**dadurch gekennzeichnet, dass**
die Identität des Manipulators (10) durch eine Sendevorrichtung (11) beigestellt wird, welche der Manipulator (10) mitführt, in welcher eine Identifikationssignatur für den Manipulator (10) gespeichert ist, wobei die Sendevorrichtung im Fall einer Manipulation an einem Tier (2) Teil des Netzwerkes wird und die zum Manipulator (10) gehörenden Identifikationssignatur aussendet, wobei die Sendevorrichtung (11) als Übertragungsweg beim Senden den Körper des Manipulators (10) verwendet und dazu Signale in den Körper des Manipulators einkoppelt.

2. Verfahren nach Anspruch 1, **dadurch gekennzeichnet, dass** die Einkopplung kapazitiv erfolgt.

3. Verfahren nach Anspruch 1 oder 2, **dadurch gekennzeichnet, dass** als Manipulation eine Substanz an ein Tier (2) verabreicht wird und dass die gespeicherten Daten auch die Art und Menge der verabreichten Substanz sowie Ort und Zeitpunkt der Manipulation umfassen.

4. Verfahren nach Anspruch 3, **dadurch gekennzeichnet, dass** der Substanz eine Identifikationssignatur zugeordnet ist, die vor, zu Beginn oder während der Manipulation an die Empfangsvorrichtung (3) übertragen wird.

5. Verfahren nach einem der Ansprüche 1 bis 4, **dadurch gekennzeichnet, dass** die Daten nur unter der Voraussetzung, dass das Netzwerk während der Manipulation nicht unterbrochen wurde, übersandt werden.

6. Verfahren nach einem der Ansprüche 1 bis 5, **dadurch gekennzeichnet, dass** die Manipulation mit einer Manipulationsvorrichtung (7) durchgeführt wird, wobei die Manipulationsvorrichtung (7) eine Identifikationssignatur aufweist, die vor, zu Beginn oder während der Manipulation an die Empfangsvorrichtung (3) übertragen wird.

7. Verfahren nach einem der Ansprüche 1 bis 6, **dadurch gekennzeichnet, dass** in das Netzwerk eine am Tier (2) angebrachte elektronische Tiermarke (5) eingebunden wird.

8. Verfahren nach Anspruch 6 oder 7, **dadurch gekennzeichnet, dass** durch die Berührung des Tieres (2) mit der Manipulationsvorrichtung (7) dem Tier (2) zugehörige Daten an die Manipulationsvorrichtung (7) übertragen und vorzugsweise auf dieser angezeigt werden.

9. System (1) zur Aufzeichnung von Daten, die durch die von einem Manipulator (10), welcher ein Mensch ist, durchgeführte Manipulation eines Tieres (2) generiert werden, wobei das System (1) ein Netzwerk für die Übertragung der Daten umfasst, wobei das Netzwerk zumindest eine Sendevorrichtung (4) und zumindest eine Empfangsvorrichtung (3) umfasst, die zur Kommunikation über die Haut des Tieres (2) ausgebildet sind, und wobei die Sendevorrichtung (4) und/oder der Empfangsvorrichtung (3) einen Datenspeicher umfasst, in dem ein Software-Programm hinterlegt ist,
**dadurch gekennzeichnet, dass**
das System eine Sendevorrichtung (11) umfasst, welche durch den Manipulator (10) mitgeführt ist, wobei in der Sendevorrichtung (11) eine Identifikationssignatur für den Manipulator (10) gespeichert ist und wobei die Sendevorrichtung (11) durch ein Softwareprogramm dazu steuerbar ist, die Identifikationssignatur im Fall einer Manipulation auszusenden und wobei die Sendevorrichtung (11) zur Kommunikation über die Haut des Manipulators (10) ausgebildet ist.

10. System (1) nach Anspruch 9, **dadurch gekennzeichnet, dass** das Netzwerk weiter eine Manipulationsvorrichtung (7) umfasst die durch eine Impfpistole oder ein Fieberthermometer oder eine Besamungseinrichtung gebildet ist.

11. System (1) nach Anspruch 9 oder 10, **dadurch gekennzeichnet, dass** das Netzwerk eine elektronische Tiermarke (5) umfasst, insbesondere dass ein Empfänger durch die Tiermarke (5) gebildet ist.

12. System nach Anspruch 11, **dadurch gekennzeichnet, dass** die elektronische Tiermarke (5) einen Netzwerkknoten in einem Ortungssystem bildet.

## Claims

1. Method for recording data generated by the manipulation of an animal (2) carried out by a manipulator (10), which is a human being, whereby the data are transmitted by a transmitting device (4) to a receiving device (3), whereby a network comprising the transmitting device (4), the receiving device (3) and the animal (2) is set up for the transmission of the data, whereby the animal (2) is identified by means of an identification code and the data are assigned to the animal (2), whereby the identity of the manipulator (10) is recorded as part of the manipulation data,
**characterized in that**
the identity of the manipulator (10) is provided by a transmitting device (11) which is carried by the manipulator (10), in which an identification signature for the manipulator (10) is stored, whereby in the event of manipulation of an animal (2) the transmitting device becomes part of the network and transmits the identification signature belonging to the manipulator (10), whereby the transmitting device (11) uses the body of the manipulator (10) as the transmission path when transmitting and couples signals to the body of the manipulator for this purpose.

2. Method according to Claim 1, **characterized in that** the coupling is capacitive.

3. Method according to Claim 1 or 2, **characterized in that** the manipulation is a substance being administered to an animal (2) and that the stored data also comprises the type and amount of the administered substance as well as the place and time of the manipulation.

4. Method according to Claim 3, **characterized in that** the substance is assigned an identification signature which is transmitted to the receiving device (3) before, at the beginning of or during the manipulation.

5. Method according to any one of Claims 1 to 4, **characterized in that** the data is transmitted only on condition that the network has not been interrupted during the manipulation.

6. Method according to any one of Claims 1 to 5, **characterized in that** the manipulation is carried out with a manipulation device (7), the manipulation device (7) having an identification signature which is transmitted to the receiving device (3) before, at the beginning of or during the manipulation.

7. Method according to any one of Claims 1 to 6, **characterised in that** an electronic animal tag (5) on the animal (2) is integrated in the network.

8. Method according to Claim 6 or 7, **characterized in that** by touching the animal (2) with the manipulation device (7), data associated with the animal (2) is transmitted to the manipulation device (7) and preferably displayed thereon.

9. System (1) for recording data generated by the manipulation of an animal (2) performed by a manipulator (10), which is a human being, whereby the system (1) comprises a network for the transmission of the data, whereby the network comprises at least one transmitting device (4) and at least one receiving device (3) which are configured to communicate via the skin of the animal (2), and whereby the transmitting device (4) and/or the receiving device (3) comprise a data memory in which a software programme stored,
**characterized in that**
the system comprises a transmitting device (11) which is carried by the manipulator (10), whereby an identification signature for the manipulator (10) is stored in the transmitting device (11) and whereby the transmitting device (11) can be controlled by a software programme to transmit the identification signature in the event of manipulation and whereby the transmitting device (11) is configured for communication via the skin of the manipulator (10).

10. System (1) according to Claim 9, **characterized in that** the network further comprises a manipulation device (7) which is an inoculation gun or a thermometer or an insemination device.

11. System (1) according to Claim 9 or 10, **characterized in that** the network comprises an electronic animal tag (5), in particular that a receiver is formed by the animal tag (5).

12. System according to Claim 11, **characterized in that** the electronic animal tag (5) forms a network node in a tracking system.

## Revendications

1. Procédé pour l'enregistrement de données qui sont générées par la manipulation d'un animal (2) réalisée par un manipulateur (10) qui est un être humain, dans lequel les données sont transmises par un dispositif d'émission (4) à un dispositif de réception (3), dans lequel pour la transmission des données est constitué un réseau comprenant le dispositif d'émission (4), le dispositif de réception (3) et l'animal (2), et dans lequel l'animal (2) est reconnu à l'aide d'un code d'identification et les données de l'animal (2) sont affectées, dans lequel l'identité du manipulateur (10) est saisie comme faisant partie des données de la manipulation,
**caractérisé en ce que**
l'identité du manipulateur (10) est fournie par un dispositif d'émission (11) que le manipulateur (10) porte, dans lequel est mémorisée une signature d'identification pour le manipulateur (10), dans lequel le dispositif d'émission, dans le cas d'une manipulation sur un animal (2), devient une partie du réseau et envoie la signature d'identification appartenant au manipulateur (10), dans lequel le dispositif d'émission (11) utilise comme voie de transmission lors de l'envoi le corps du manipulateur (10) et couple pour cela des signaux dans le corps du manipulateur (10).

2. Procédé selon la revendication 1, **caractérisé en ce que** le couplage se fait de manière capacitive.

3. Procédé selon la revendication 1 ou 2, **caractérisé en ce que** comme manipulation, une substance est administrée à un animal (2) et **en ce que** les données mémorisées comprennent également le type et la quantité de la substance administrée ainsi que le lieu et le moment de la manipulation.

4. Procédé selon la revendication 3, **caractérisé en ce qu'**est affectée à la substance une signature d'identification qui est transmise au dispositif de réception (3) avant, au début ou pendant la manipulation.

5. Procédé selon l'une des revendications 1 à 4, **caractérisé en ce que** les données sont envoyées seulement à condition que le réseau n'ait pas été interrompu pendant la manipulation.

6. Procédé selon l'une des revendications 1 à 5, **caractérisé en ce que** la manipulation est réalisée avec un dispositif de manipulation (7), dans lequel le dispositif de manipulation (7) comporte une signature d'identification qui est transmise au dispositif de réception (3) avant, au début ou pendant la manipulation.

7. Procédé selon l'une des revendications 1 à 6, **caractérisé en ce qu'**un marquage électronique d'animal (5) appliqué sur l'animal (2) est intégré dans le réseau.

8. Procédé selon la revendication 6 ou 7, **caractérisé en ce que** par le contact de l'animal (2) avec le dispositif de manipulation (7), des données associées à l'animal (2) sont transmises au dispositif de manipulation (7) et de préférence affichées sur celui-ci.

9. Système pour l'enregistrement de données qui sont générées par la manipulation d'un animal (2) réalisée par un manipulateur (10) qui est un être humain, dans lequel le système (1) comprend un réseau pour la transmission des données, dans lequel le réseau comprend au moins un dispositif d'émission (4) et au moins un dispositif de réception (3) qui sont conçus pour la communication par la peau de l'animal (2), et dans lequel le dispositif d'émission (4) et/ou le dispositif de réception (3) comprend une mémoire de données dans laquelle est stocké un programme de logiciel, **caractérisé en ce que**
le système comprend un dispositif d'émission (11) que le manipulateur (10) porte, dans lequel une signature d'identification pour le manipulateur (10) est mémorisée dans le dispositif d'émission (11) et dans lequel le dispositif d'émission (11) est apte à être commandé par un programme de logiciel pour envoyer la signature d'identification dans le cas d'une manipulation, et dans lequel le dispositif d'émission (11) est conçu pour la communication par la peau du manipulateur (10).

10. Système (1) selon la revendication 9, **caractérisé en ce que** le réseau comprend en outre un dispositif de manipulation (7) qui est formé par un pistolet de vaccination ou un thermomètre vétérinaire ou un dispositif d'insémination.

11. Système (1) selon la revendication 9 ou 10, **caractérisé en ce que** le réseau comprend un marquage électronique d'animal (5), en particulier **en ce qu'**un récepteur est formé par le marquage d'animal (5).

12. Système selon la revendication 11, **caractérisé en ce que** le marquage électronique d'animal (5) forme un nœud de réseau dans un système de localisation.
